(19) Europäisches Patentamt
European Patent Office
Office européen des brevets

(11) Publication number: 0 366 411 A2

(12) **EUROPEAN PATENT APPLICATION**

(21) Application number: 89310945.4

(22) Date of filing: 24.10.89

(51) Int. Cl.5: C08F 255/06 , //(C08F255/06, 210:06)

(30) Priority: 28.10.88 US 264485

(43) Date of publication of application: 02.05.90 Bulletin 90/18

(84) Designated Contracting States: AT BE CH DE ES FR GB GR IT LI LU NL SE

(71) Applicant: EXXON CHEMICAL PATENTS INC.
200 Park Avenue
Florham Park New Jersey 07932(US)

(72) Inventor: Kresge, Edward Nathan
68 Parlin Lane
Watchung New Jersey 07060(US)
Inventor: Datta, Sudhin
30 Briarwood Drive
Matawan New Jersey 07747(US)
Inventor: Lohse, David John
556 Stoney Brook Drive
Bridgewater New Jersey 08807(US)

(74) Representative: Dew, Melvyn John et al
Exxon Chemical Limited Exxon Chemical
Technology Centre P.O. Box 1
Abingdon Oxfordshire, OX13 6BB(GB)

(54) **Graft polymers of ethylene-propylene-diene monomer polymers with propylene, means of preparation, and use of polypropylene compositions.**

(57) Graft polymer comprising an ethylene-propylene-diene monomer polymer having polypropylene grafted thereto at one or more of the diene monomer sites, the process for making the graft polymer comprising the sequential use of two different Ziegler-Natta catalyst systems, the use of the graft polymer for improving the impact properties of polypropylene compositions, and improved polypropylene blends.

EP 0 366 411 A2

# GRAFT POLYMERS OF ETHYLENE-PROPYLENE-DIENE MONOMER POLYMERS WITH PROPYLENE, MEANS OF PREPARATION, AND USE IN POLYPROPYLENE COMPOSITIONS

## Field of the Invention

This invention relates to improved thermoplastic compositions. In other aspects it relates to graft polymers comprising an ethylene-propylene-diene monomer polymer having polypropylene grafted thereto at one or more of the diene monomer sites, to the process for making the graft polymer comprising the sequential use of two different Ziegler-Natta catalyst systems, and to the use of the graft polymer for improving the impact properties of polypropylene compositions.

## Background Information

Isotactic polypropylene is known to be one of the lightest major plastics. Yet, because of its high crystallinity, it is known to possess high tensile strength, stiffness and hardness. These characteristics allow finished materials made thereof to have good gloss and high resistance to marring. Further, its high melting point allows it to be subjected to elevated temperatures without loss of high tensile strength. However, because of the restriction of molecular motion characteristic of isotactic polypropylene brittle behavior takes place not far below room temperature and its poor low temperature impact strength limits its usefulness.

Different ways of improving the impact strength of the polypropylene at low temperatures without unacceptable adverse effect on its other properties, including its flexural rigidity and thermal resistance have been proposed.

U.S. Patent No. 4,113,802, MATTEOLI et al., is directed to a process for producing polypropylene-based compositions with high impact strength by first polymerizing propylene in the presence of a catalyst such as $TiCl_3$, and then adding ethylene or a mixture of ethylene and propylene and continuing the polymerization.

U.S. Patent No. 4,128,606 FURUTACHI et al. is directed to preparation of impact-resistant polypropylene composition by first polymerizing propylene in the presence of a titanium-based catalyst and an organoaluminum compound; polymerizing propylene and ethylene in the presence of the foregoing reaction mix; and, in the presence of the reaction mix thus obtained, polymerizing either ethylene or both ethylene and propylene.

The usefulness of certain ethylene-alpha-olefin elastomeric polymers, generally referred to as ethylene-propylene rubber ("EPR"), for improving the impact strength of polypropylene ("PP") plastic compositions is known. The improvement may be generally accomplished through producing a simple physical mixture of PP with EPR.

For example, Japanese Patent No. 19934/67 is directed to producing shock-resistant polypropylene by adding an elastomer solution, which may be ethylene-propylene rubber, to polypropylene.

U.S. Patent No. 4,087,485, HUFF, is directed to improving the impact strength of a polypropylene composition by incorporating therein minor amounts of polyethylene and ethylene-propylene copolymer.

As this literature exemplifies it is recognized that two or more polymers may be blended together to form a wide variety of random or structured morphologies to obtain products that potentially offer desirable combinations of characteristics. However, it may be difficult or impossible in practice to achieve many potential combinations through simple blending because of some inherent and fundamental problems. Frequently, the two polymers are thermodynamically immiscible, which precludes generating a truly homogenous product. This may not be a problem per se since often it is desirable to have a two-phase structure. However, the situation at the interface between these two phases very often does lead to problems. The typical case is one of high interfacial tension and poor adhesion between the two. This interfacial tension contributes, along with high viscosities, to the inherent difficulty of imparting the desired degree of dispersion to random mixtures and to their subsequent lack of stability giving rise to gross separation or stratification during later processing or use. Poor adhesion leads, in part, to the very weak and brittle mechanical behavior often observed in dispersed blends and may render some highly structured morphologies impossible.

The word "compatibility" has a technological usage in the polymer industry which refers to whether an immiscible polymer blend tends to form a stable dispersion, one less subject to problems of gross separation or stratification. A "compatibilizer" is a polymer that has the characteristics or properties permitting it to stabilize, or "compatibilize", a heterophase polymer blend.

It is generally known that the presence of certain polymeric species, usually block or graft copolymers suitably chosen, may serve as effective compatibilizers. This is believed to occur because of a preferential location of the compatibilizer at the interface of the phases in a blend. This preferential location most likely occurs as a result of entanglement of respective segments of the compatibilizer in the phases to which the segments are similar in chemical characteristics. This increases the adhesion between the phases and as a result of reduced surface energy between the phases better dispersion is permitted. The improved dispersion is observable directly by microscopic investigation of domain size of the dispersed phase. It has been suggested that ideally the compatibilizer component should be a block or graft with different segments that are chemically identical to those in the respective phases.

Certain polymer blends have previously been utilized with compatibilizers. U.S. Patent No. 4,299,931 is directed to compatibilized polymer blends, wherein a blend of an olefin polymer and nitrile rubber is compatibilized by the addition of a block copolymer of the olefin polymer and the nitrile rubber.

U.S. Patent No. 4,410,482 discloses the formation of a graft copolymer of nylon and polyethylene as part of a blend of nylon and polyethylene. The presence of the graft copolymer is said to have a dramatic effect on the properties of the blends (in this case, its permeability) which can be related to its function as a compatibilizer.

Likewise U.S. Patent No. 4,264,747 discloses compatibilizing a blend of styrene acrylonitrile resins with styrene-ethylene-butylene-styrene (SEBS) block copolymer where the SEBS copolymer has been made compatible with the styrene acrylonitrile resin by forming a graft copolymer compatibilizer by grafting a polar monomer which may be the styrene acrylonitrile resin onto the SEBS backbone.

U.S. Patent 3,739,042 discloses block copolymers prepared by first polymerizing an olefin or diolefin, or combinations thereof, for example, amorphous ethylene-propylene or ethylene-propylene-cyclopentadiene, in the presence of an appropriate anionic catalyst to form a first block, then polymerizing thereto at the still "living" catalytic site monomers which polymerize by a free radical mechanism, for example, acrylonitrile, styrene, etc. The block polymers of this invention are said to possess the unique ability to render dissimilar polymers compatible in one another. The linear block copolymers of this invention are further characterized by the fact that the anionically polymerized block obtained from alpha-olefins is normally substantially crystalline, i.e., it has a degree of crystallinity of at least 25%.

Despite the above knowledge in the art, a truly effective compatibilizer for blends of isotactic-polypropylene ("i-PP") plastic compositions with EPR has not been available to the public or industry prior to the invention described herein and that described in co-pending companion case Attorney's Docket E-123. The prior art block polymers all suffer to varying degrees the problem that where a single catalyst system is utilized the different segments will have characteristics arising from the catalyst system chosen and not necessarily the characteristics of the blend polymers with which utilized. Thus where i-PP is necessarily polymerized with catalyst systems yielding stereo-specific polymers having the crystalline structure necessary for plastics, EPR is typically polymerized utilizing catalyst systems yielding substantially amorphous, random copolymers. Clearly the general goal of achieving chemical identity between compatibilizer segments and respective polymers in an EPR/i-PP blend is not met when a single stereo-specific catalyst system is used for both i-PP and random EPR segments.

The graft polymers of this invention comprising random EPR having substantially crystalline polypropylene grafted thereto at one or more diene monomer sites are believed to be unknown prior to the disclosure herein.

Various methods have been developed for preparing the prior art block polymers having polymer segments differing from one another in composition.

European Patent No. 83-949-A discloses a thermoplastic block copolymer comprising one or more crystalline propylene blocks and one or more alkane - propylene blocks, in at least one of which diene units are present (constituting an "EPDM" block). The polymer is prepared by first polymerizing propylene, then polymerizing an EPDM and finally polymerizing propylene or ethylene. The process relates to the formation of substantially crystalline polypropylene and specifies the use of known high-stereo-specific catalyst systems, exemplifying only $TiCl_3$-containing components. Dienes which are disclosed to be suitable in the preparation of the EPDM block include norbornadiene, dicyclopentadiene, tricyclopentadiene, 5-ethylidene norbornene -2, 5-methylene-norbornene-2, 5 vinylnorbornene -1, and 5- (2-propenylnorbornene -2).

Japanese Patent 69/19,542 discloses a method for preparing propylene/ethylene block copolymers comprising carrying out polymerization using a stereo-specific catalyst in a manner to achieve specific ratios of A and B blocks. The A block can be a propylene homoblock and the B block can be an ethylene/propylene copolymer where the length of the B block can be regulated by the addition of a diene hydrocarbon. Suitable dienes included 1,5-cyclopentadiene. The catalyst exemplified comprises $TiCl_3$. Japanese 69/20,751 contains a similar disclosure wherein propylene is polymerized alone, then propylene

and 1-7 -octadiene and finally ethylene alone.

U.S. Patent 3,454,675 discloses a method of preparing block polymers of mono -1 olefins using two reactors. The reactors are compartmented to prevent short circuiting of the catalyst in the first reactor which results in a short residence time for some of the catalyst in the first reactor. A first mono -1- olefin is polymerized in the first reactor, the polymer and its catalyst is transferred to the second reactor and the second mono 1- olefin is copolymerized therein. In one embodiment the reaction mixture of the first reactor is stripped of unreacted first mono -1- olefin before transferring it to the second reactor in order to achieve pure block polymer. In another embodiment the unreacted monomer is transferred with polymer and catalyst to the second reactor. The result is a mixed block copolymer that can comprise a polypropylene segment and an ethylene-propylene copolymer segment. Catalyst systems are based on transition metal halides of titanium, zirconium, hafnium or germanium, $TiCl_3$ is preferred.

U.S. Patent No. 3,268,624 discloses a method for preparing a two segment block copolymer of ethylene and propylene which comprises first polymerizing a feed comprising propylene and propylene with a small amount of ethylene using a catalyst comprising titanium trichloride, an alkyaluminum dihalide, and an alkoxy silane. After the polymerization has proceeded for the desired length of time the first (propylene) feed is discontinued and a second feed of ethylene or ethylene with a small amount of propylene is fed to the reactor. A single reactor is used and the polymer contains no unsaturation.

U.S. Patent No. 3,301,921 discloses a composition of matter comprising a highly isotactic polypropylene polymer chain, uninterrupted by ethylene, having attached thereto, at one end, an ethylene-propylene copolymer. The process for forming the composition of the invention utilizes catalyst and operation conditions selected to produce stereo-specific polymers. The ethylene content of the block polymer is about 1 to 20 wt % while the ethylene content of the ethylene-propylene segment is about 10 to 90 wt %. The product is said to have improved impact resistance over polypropylene alone. The propylene polymerization is carried out to about 90 to 95% of the desired propylene conversion. Either the polypropylene or the ethylene-propylene copolymer can be produced first, in both cases the first polymerized monomer(s) are contacted with a stereo-specific catalyst with subsequent addition of the second monomer(s) to the reaction mix. The catalyst used is $TiCl_3$ with aluminum alkyl or aluminum alkyl halides. U.S. Patent 3,318,976 discloses and claims the process for preparing the product claimed in the '921 patent. Both patents are continuation-in-part applications based on the same earlier filed application (S.N. 77,776 filed December 22, 1960).

Ziegler-Natta catalysis is capable of producing highly isotactic therefore highly crystalline polymers and in addition can polymerize a wide range of monomers including ethylene and propylene. Additionally Ziegler-Natta catalysis can be utilized to produce random, elastomeric polymers from the same readily available monomers. However this method of catalysis results in polymers with a very short life making sequential polymerization of crystalline and random polymer segments difficult or impossible. A method was sought therefore that could utilize the benefits of Ziegler-Nàtta polymerization to produce a polymer composition having both crystalline polypropylene segments and highly random, substantially amorphous EPR segments to serve as both a compatibilizer for polypropylene/EPR blends and a i-PP impact strength improver.

## Objects of the Invention

Accordingly, it is an object of this invention to provide a graft polymer of polypropylene and EPR that is useful in the field of thermoplastic compositions. More specifically, it is an object of this invention to provide graft polymers of i-PP and EPR where the respective segments retain the stereo-specific characteristics of substantial crystallinity in the PP segment(s) and a large degree of randomness in the EPR segment(s) and a process for preparing them. Another object of the invention is to provide compositions of i-PP, particularly those blended with EPR, that exhibit improved properties, including impact strength, gained by the inclusion of the graft polymer of this invention. It is a further object of this invention to provide a method for compatibilizing blends of i-PP and EPR by utilizing compatibilizer polymers having segments chemically similar to the blends in which used. And yet another object of this invention is to provide a method for using graft polymers of i-PP and EP to improve the properties of alpha-olefin copolymer compositions and blends utilized as plastics, thermoplastics, elastomers and combinations thereof.

## Summary of the Invention

The present invention is broadly directed to a polymer composition comprising ethylene-alpha-olefin-diene monomer polymer having polypropylene grafted thereto at one or more of the diene monomer sites, or more specifically, to ethylene-propylene-diene monomer polymer grafted with isotactic polypropylene. It is further directed to a process for preparing a graft polymer broadly comprising the steps of:

A) combining under polymerization conditions ethylene, one or more alpha olefin monomers, and one or more diene monomers in the presence of a non-stereospecific Ziegler-Natta catalyst system selected for its capability for producing random polymers;

B) combining under polymerization conditions a polymer composition prepared in accordance with step A) and propylene in the presence of a stereo-specific Ziegler-Natta catalyst system selected for its capability for producing isotactic polypropylene.

The invention is further directed to blends and compatibilized blends of polymers comprising at least polypropylene and graft polymers comprised of ethylene-alpha-olefin-diene monomer polymers having polypropylene grafted thereto at one or more of the diene monomer sites, and optionally, ethylene-propylene rubber. And accordingly, it is directed to a method for compatibilizing a blend of ethylene-propylene rubber and isotactic polypropylene utilizing graft polymers comprised of ethylene-alpha-olefin-diene monomer polymers having polypropylene grafted thereto at one or more of the diene monomer sites.

## Brief Description of the Drawings

FIG. 1 is a microphotograph showing the domain size of an 80%/20% by weight blend of PP/EP in a. and a 72/18/10 by weight blend of PP/EP/graft polymer of this invention in b. The graft copolymer is an ethylene/propylene/vinyl norbornene terpolymer (44.5/52.7/2.8 wt.%) composition having individual chains thereof grafted with isotactic-polypropylene.

## Detailed Description of the Invention

### The Graft Polymer

The graft polymer of this invention is a polymer comprising an ethylene-alpha-olefin-diene monomer polymer with polypropylene grafted thereto at one or more of the diene monomer sites. The structure of this graft polymer may be illustrated in one embodiment as:

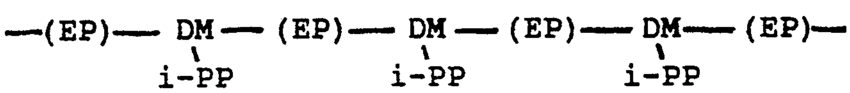

where "EP" is ethylene-propylene random segments, "DM" is diene monomer, and "i-PP" is isotactic polypropylene. This graft polymer preferably has a structure directed to optimizing its use as a compatibilizer in PP/EPR blends and accordingly will preferably have constituent segments that resemble the blend components as closely as possible in terms of molecular weight, crystallinity and, for the ethylene-alpha-olefin-diene monomer polymer, compositional distribution of monomers. The terms EPR (ethylene-propylene rubber) and ethylene-alpha-olefin-diene monomer polymer ("EPDM") as used herein with respect to both EPR in blends and block polymers and the pre-graft EPDM of this invention are both meant to be inclusive of copolymers (for EPR), terpolymers, tetrapolymers, etc., (for both EPR and EPDM). Thus the pre-graft EPDM will comprise ethylene, one or more alpha-olefins, and one or more diene monomers, will be substantially amorphous, and will have a substantially random arrangement of at least the ethylene and the alpha-olefin monomers.

The EPDM, prior to grafting with polypropylene, will generally have a molecular weight range approximately equivalent to that of any of the EPR components useful in PP/EPR blends, preferably, approximately equivalent to that of the specific EPR component in the blend. Typically this will be between about 5,000 and up to about 1,000,000 or higher, more typically between about 10,000 and 500,000, and even more typically between about 15,000 and 350,000, where the molecular weight is weight-average ("$M_w$").

Furthermore, the molecular weights of the EPDM segments of the backbone, that is, between propylene

grafts or extensions from the grafting diene monomer site, is likewise selected such that it matches the molecular weight of the EP in the blend.

Typically EPR is "substantially amorphous", and when that term is based to define the EPDM segment or segments it is to be taken to mean having a degree of crystallinity less than 25%, preferably less than about 15%, and more preferably less than about 10% as measured by means known in the art. The three major known methods of determining crystallinity are based on specific volume, x-ray diffraction, and infrared spectroscopy. Another well-established method, based on measurement of heat content as a function of temperature through the fusion range, is now easily carried out using differential scanning calorimetric measurements. It is known that these independent techniques lead to good experimental agreement.

Additionally, it is known in the art that the tendency of a particular combination of catalyst system and monomers to produce "blocky", random, or alternating polymers can be characterized by the product of the reactivity ratios defined for the given monomers under the specific reaction conditions encountered. If this product is equal to 1.0, the sequence distribution will be perfectly random; the more the product is less than 1.0, the more the monomers will approach alternating sequence; and, the more the product is greater than 1.0, the more the monomers will tend to have a "blocky" sequence distribution. Generally speaking, the segments of a polymer which crystallize are linear segments which have a number of identical (both by chemical make-up and stereo-specific orientation) units in a row. A combination of such segments are said to yield "blocky" polymer. If there is little or no such sequential order within the segments making up a polymer chain, that chain will be very unlikely to conform itself into the correct shape to fit into the spatial order of a crystal and will accordingly exhibit a low degree of crystallinity. The EPDM portion of the graft polymer of this invention accordingly has a reactivity ratio product less than 2.0, preferably less than about 1.5, and more preferably less than about 1.25.

The EPDM will contain about 20 to about 90 weight percent ethylene, preferably about 30 to 85 weight percent ethylene, and even more preferably about 35 to about 80 weight percent ethylene.

Alpha-olefins suitable for use in the preparation of the EPDM, and in general for EPR, are preferably $C_3$-$C_{16}$ alpha-olefins. Illustrative non-limiting examples of such alpha-olefins are propylene, 1-butene, 1-pentene, 1-hexene, 1-octene, and 1-dodecene, with propylene being principally preferred. The alpha-olefin content of the EPDM and EPR is generally about 10 to about 80 weight percent, preferably about 15 to about 70 weight percent. As indicated above the choice of alpha-olefin, or alpha-olefins, preferably will follow that of the alpha-olefin(s) in the EPR though a selection that differs within the examples given above will still be useful for the purposes of this invention.

The ethylene/propylene ratio of the backbone is also preferably closely matched to the ratio of ethylene to propylene in the EPR of the blend. At the very least the composition of the backbone is such that it is miscible with the component of the blend. This ratio can generally be expected to be on the order of about 1:4 to about 9:1.

The diene monomers useful in this invention consist of two groupings. The first grouping comprises diene monomers conventionally used in known EPDM polymers and the second comprises a select group of diene monomers which contain two non-conjugated sites of ethylenic unsaturation which are of unequal reactivity with respect to Ziegler-Natta polymerization. The conventionally used diene monomers (hereinafter, "known DM's") are generally selected from the easily polymerizable non-conjugated dienes and can be straight chain, branched chain or cyclic hydrocarbon di-olefins or cycloalkenyl substituted alkenes, having about 6 to about 15 carbon atoms. Illustrative non-limiting examples of particular non-conjugated diene monomers suitable for use in this group are:

A. straight chain acyclic dienes such as 1,4-hexadiene and 1,6-octadiene.

B. branched chain acyclic dienes such as 5-methyl-1, 4-hexadiene; 3,7-dimethyl-1, 6- octadiene; 3,7-dimethyl-1, 7-octadiene and the mixed isomers of dihydromyricene and dihydro-ocinene;

C. single ring alicyclic dienes such as 1,3-cyclopentadiene; 1,4-cyclohexadiene; 1,5-cyclo-octadiene and 1,5-cyclododecadiene;

D. multi-ring alicyclic fused and bridged ring dienes such as tetrahydroindene, methyl tetrahydroindene, dicyclopentadiene; bicyclo-(2,2,1)- hepta-2, 5-diene; alkenyl, alkylidene, cycloalkenyl and cycloalkylidene norbornenes such as 5-methylene-2-norbornene, 5-ethylidene-2-norbornene, 5-isopropylidene-2-norbornene, 5-(4-cyclopentenyl, -2norbornene, and 5-cyclohexylidene-2-norbornene; and

E. cycloalkenyl-substituted alkenes., such as allyl cyclohexene, vinyl cyclooctene, allyl cyclodecene, vinyl cyclododecene.

Of these known DM's, the preferred dienes are dicyclopentadiene, 1,4-hexadiene, 5-methylene-2-norbornene, and 5-ethylidene-2-norbornene. Particularly preferred dienes are 5-ethylidene-2-norbornene and 1,4-hexadiene. The total known DM's content in the EPDM can be from 0 to about 15 weight percent,

preferably 0.5 to about 12 weight percent, and most preferably about 1.0 to about 6.0 weight percent.

The second group diene monomers are critical to this invention and are preferably those which contain two non- conjugated sites of ethylenic unsaturation which are of unequal reactivity with respect to Ziegler-Natta polymerization (hereinafter, "unequally reactive DM's"). By unequal reactivity it is defined here that one site of unsaturation, or double bond, is readily polymerizable with catalyst systems utilized conventionally to prepare EPR while not being readily polymerized by catalyst systems utilized conventionally to prepare i-PP. The other site of unsaturation will be readily polymerizable with i-PP catalysts but not so much with EPR catalysts. The determination of whether a given site of unsaturation is readily polymerizable with specific catalyst systems is conventionally determined by comparing the rate of conversion of monomers in a polymerization reaction into the polymer product. Rates of conversion are measured, as known in the art, by, for example, feeding known weight percent amounts of the selected monomers in solvent into a standard continuous-flow stirred tank reactor along with the catalyst/co-catalyst system, and analyzing the weight percent monomer content (again in solvent) of the resulting polymer product. The rate of conversion is the weight percent of the monomer in the polymer product to the weight percent of the monomer in the initial feed stream. Ethylene content is determined conveniently by methods described in ASTM D3900, diene monomer content is determined conveniently by refractive index methods as described in I. J. Gardner and G. VerStrate, Rubber Chem, Tech., 46, 1019 (1973).

Thus the most preferred unequally reactive DM's are those having a double bond internally incorporated in a norbornyl bicyclic configuration and one double bond in a terminal exocyclic position. In this case the norbornyl double bond will polymerize readily in a conventional EPR polymerization reaction while the exocyclic double bond will not. The terminal exocyclic double bond will instead readily polymerize in an i-PP polymerization. Though hydrocarbon compounds having equally reactive sites of unsaturation, for example the alpha-omega diolefins such as 1,5-hexadiene or the bicyclic diolefins such as norbornadiene, may be useful in accordance with this invention, the equal reactivity will permit of the crosslinking of some of the polymer chains formed and will require additional separation steps to isolate the graft copolymers of this invention.

The preferred unequally reactive DM's then are represented by the following structural representation:

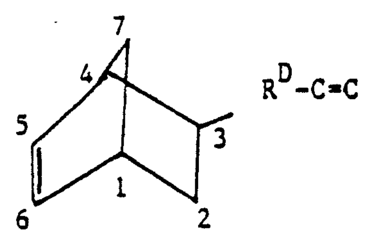

where $R^D$ is hydrocarbyl and linear, branched, or cyclic, and may include one or more sites of unsaturation internal to a cyclic structure, and may contain from 0 to about 20 carbon atoms. Further, the $-R^D-C=C$ substituent may be incorporated at any position shown above as numbers 1-7, so long as that position does not also contain the norbornyl unsaturation, illustrated above between positions 5 and 6. Specific preferred unequally reactive DM's include the alkyl-substituted norbornenes, of which 5-vinyl-2-norbornene and 5-(3′-butenyl)-2-norbornene are most preferred. Furthermore, the norbornyl compounds represented in the structural representation above can also be alkylated with, for example, $C_1$-$C_4$ alkyls at one or more of the carbon atoms in any of the positions not part of the norbornyl unsaturation and not having the $R^D-C=C$ substituent without departing from the scope of this invention.

The unequally reactive DM's are preferably incorporated in the EPDM in an amount ranging from about 0.1 to about 6 wt.% of the EPDM, most preferably ranging from about 0.5 to about 3 wt.%.

The polypropylene graft segment or segments will preferably resemble in molecular weight and crystallinity the polypropylene component or compound with which the graft polymer of this invention may be blended. Thus, the molecular weight of the polypropylene segment(s) is between 1/3 and 3 times that of the blend polypropylene and is most preferably equal. While an ideal match is preferred, "mismatched" weights will be useful to some extent and are considered within the scope of the invention. Thus the polypropylene segment(s) will have molecular weights of about 10,000 up to about 10,000,000, or higher, preferably about 50,000 to about 300,000 $M_w$. While molecular weights lower than that of the blend polypropylene will have some effect, the effects will decrease as molecular weight decreases. Generally speaking there is little effect for i-PP below its "entanglement molecular weight" which is that weight at which there is little incorporation of the PP segment of the graft polymer into the PP matrix and

effectiveness as a compatibilizer is substantially diminished. This lower limit is about 10,000 $M_w$.

The crystallinity, or tacticity, of the polypropylene is preferably roughly equivalent to that of the matrix in which used (which will vary by end use) and accordingly may vary from being substantially amorphous to being completely crystalline, that is from about 0-100% crystallinity. Most typically, because of the extensive commercial use of isotactic polypropylene, both the graft polypropylene and the matrix polypropylene will be substantially crystalline, e.g., greater than about 90%. Generally, the PP does not contain any ethylene. However, under certain circumstances small amounts of ethylene, on the order of less than about 5% by weight, may be incorporated. This may occur naturally since a small amount of unreacted ethylene from a first polymerization of the EPDM may be present in a second polymerization of the polypropylene. This unreacted ethylene will almost necessarily be incorporated into the polypropylene. Furthermore, in certain instances the polypropylene plastics making up the bulk of the polymer blends for which this invention is useful contain small amounts of ethylene in copolymers known as "reactor copolymers". Thus, it is within the scope of the invention that the graft polypropylene contain minor amounts of ethylene, both as part of ethylene-propylene segments and as polyethylene segments. As a general rule, the tacticity of the polypropylene arms is similar enough to that of the propylene in the blend so as to have the arms co-crystallize with the blend component - most preferably the tacticity of the polypropylene is substantially equivalent.

## Preparation of the Graft Polymer

The process for preparing the graft polymer of this invention broadly comprises the steps of:

A) combining under polymerization conditions ethylene, one or more alpha olefin monomers, and one or more diene monomers in the presence of a non-stereospecific Ziegler-Natta catalyst system selected for its capability for producing random copolymers;

B) combining under polymerization conditions a polymer prepared in accordance with step A) and propylene in the presence of a stereo-specific Ziegler-Natta catalyst system selected for its capability for producing isotactic polypropylene.

Both steps A) and B) are generally practiced in accordance with current knowledge in the art relating to the coordination catalysis of alpha-olefins as developed from the early work of both Karl Ziegler and Giulio Natta. In the first step a random, amorphous EPDM polymer having the characteristics described above is prepared in a suitable reaction vessel and is then combined in the same or another suitable reaction vessel for the graft-polymerization of polypropylene. As has been surprisingly discovered, by selection of appropriate diene monomers for incorporation in the EPDM and by use of a non-stereospecific coordination-catalyst system, followed by subsequent polymerization of propylene in the presence of the EPDM thus formed and a stereospecific catalyst system, the graft polymer of this invention results.

Though one clear example of the sequential process of this invention would involve the use of two continuous flow stirred tank reactors ("CFSTR"), each operated under conditions appropriate to the type polymerization being conducted, the use of more than one CFSTR for either or both steps will be useful in accordance with this invention. Similarly, the preparation of the EPDM in a gas phase process for subsequent introduction into a propylene polymerization environment is contemplated. Of more limited usefulness, but still appropriate, would be the addition of the EPDM precursor monomers and catalyst systems into a batch reactor with the subsequent addition of the propylene and its catalyst systems after substantially all of the initial EPDM polymerization has proceeded to completion. A preferred means of accomplishing the process of this invention is the use of one or more tubular reactors, either independently or in combination with one or more of the reaction vessels and procedures disclosed herein. For example, as with the batch reactor, addition initially of the materials necessary for the EPDM polymerization into a tubular reactor, with subsequent addition into the same reactor of materials necessary for the propylene graft-polymerization at a predetermined distance down the length of the reactor, can be used to prepare the product of the invention. The predetermined distance will be that at which the ethylene and diene monomers have been substantially exhausted by incorporation into the EPDM. The use of a tubular reactor as adapted from the disclosure of U.S. Patent 4,540,753 is appropriate, the disclosure therein is expressly incorporated by reference.

In order to achieve a close match between the molecular weight of the graft polymer EPDM segment or segments and the EPR in the final polymer blend, process parameters can be adjusted. In particular, by adjusting the unequally reactive DM feed relative to other monomer feeds the unequally reactive DM content can be adjusted to incorporate a range of graft sites appropriate to the EPR molecular weight ratios. For example, if the molecular weight ratio of the EPDM of this invention to EPR is 4/1 (e.g., 120,000/

30,000), the unequally reactive DM's will be incorporated in an amount to allow approximately 3 polypropylene graftings, which will statistically be roughly evenly spaced yielding 4 EP-segments of a similar weight to the EPR of the blend.

Alternatively, in a batch, series CFSTR or tubular reactor, the unequally reactive DM's can be added in the described amounts towards the completion of the EP(DM) polymerization process. Since each such process can be performed such that the majority of the EPDM polymer has been formed of only ethylene and propylene units, the unequally reactive DM's will be incorporated towards one end. Upon subsequent polypropylene graft polymerization, the graft or grafts will occur only towards one end of the EPDM polymer leaving an ungrafted EP segment that is formed so as to have a molecular weight approximately that of the EPR in the final polymer blend.

This invention is discussed and claimed in terms of the EPDM polymer being prepared first for subsequent grafting polymerization with propylene to form the graft polymer of this invention, however, it will be obvious to those skilled in the art that the unequally reactive DM's may be incorporated first in a polypropylene polymerization process to yield a polypropylene backbone having minor amounts of diene monomer with available unsaturation for subsequent incorporation of one or more EPDM grafts. Though such a method is contemplated within the scope of this invention, it is less preferred since the substantial crystallinity of the most preferred polypropylene segments will render them substantially insoluble in the diluents typically used for the subsequent EPDM polyerization.

For the preparation of the pre-graft EPDM, any of the non-stereospecific Ziegler-Natta catalyst systems useful for preparing substantially amorphous, random ethylene-propylene polymers will be appropriate. Such systems broadly include organic and inorganic components of the transition metals of Group 4A to 8A of the Mendeleyev Periodic Table of the Elements. Particularly useful are the halides, oxyhalides, esters, acetyl acetonates, etc., of the metals Vanadium, Zirconium and Hafnium. As is well known in the art, these are utilized with cocatalyst organoaluminum compounds, organoaluminum halides, mixtures, etc. The systems may be utilized in solvent, slurry or gas-phase processes and may be supported on inert supports, such as silicon dioxide, silica gel, or metal oxides or chlorides of zinc, magnesium, etc. Also as known, prepolymers may be formed as supports for these catalyst systems. Catalyst activators or promoters, molecular weight regulators, Lewis-base electron donors all may be utilized as disclosed in the art.

More particularly, in carrying out the process of this invention, the preferred catalyst non-stereospecific Ziegler-Natta systems, are those that exhibit a differential polymerization activity with the monomers used such that the rate of conversion of ethylene and the diene monomers are approximately equal yet greater than the rate of conversion of propylene, which is equal to or greater than the rate of conversion of other selected alpha-olefins. Such preferred catalyst systems are based on vanadium compounds which have a vanadium valence of at least 3, and which are soluble in the polymerization diluent; preferably the vanadium catalyst is $VX_4$ or an oxyvanadium compound of the general formula $VOX_n(OR')_{3-n}$ where n is an integer of 2 or 3, $R'$ is a hydrocarbyl radical and X is halogen, preferably chlorine or bromine. Preferably $R'$ is $C_1$- $C_{10}$ alkyl, phenyl or benzyl, more preferably $R'$ is $C_1$- $C_4$ alkyl, e. g. , methyl, ethyl or butyl. $VCl_4$ and $VOCl_3$ are particularly useful in this EPDM polymerization. Additionally preferred as soluble vanadium compounds are the vanadium salts of beta-diketonates having the general formula of V(O~O)3 where O~O represents the diketonate anion, e.g., vanadium-tris (2,4-pentanedionate).

The preferred cocatalysts utilized to prepare an appropriate active catalyst species are the alkyl aluminums and alkyl aluminum halides. A particularly preferred cocatalyst is an aluminum compound such as $Al_2R''_3X'_3$ or $AlR''_bX'_{3-b}$, wherein $R''$ is a hydrocarbyl moiety, $X'$ is halogen and b is 1 to 2. While the halogen can be chlorine, bromine or iodine, the preferred halogen is chlorine. The hydrocarbyl moiety can be a $C_1$-$C_{20}$ alkyl, cycloalkyl or aromatic group. Preferably $R''$ is $C_1$-$C_{10}$ alkyl or cycloalkyl, phenyl or benzyl. Most preferably $R''$ are methyl, ethyl, n-propyl, iso-butyl, hexyl, cyclohexyl, phenyl or mixtures thereof. In its preferred embodiment the aluminum compound is a dialkyl aluminum halide or alkyl aluminum sesquihalide. More preferably the aluminum compound is diethyl aluminum chloride ("DEAC") or ethyl aluminum sesquichloride ("EASC"). In utilizing the catalyst system of this invention the vanadium compound and aluminum compound can be utilized at a Al/V mole ratio of about 1 to about 40, preferably about 2 to about 20, more preferably about 3 to about 10, e.g., 5 to about 10.

While a wide range of diluents are known to be suitable for EPDM polymerization and thus suitable for the purposes of this invention, the diluent is preferably an organic compound which is a solvent for the monomers and polymers as well as the vanadium compound. Typically such diluents include aliphatic, aromatic and cycloalphatic diluents, hexane and toluene are representative.

The polymerization reaction can be conducted at a gage pressure of about 0 KPa to about 3000 KPa and at any temperature suitable for Ziegler polymerization reactions. The preferred pressure range for carrying out the EPDM polymerization is about 100 to about 1500 KPa, more preferably about 100 to about

3000 KPa. The polymerization is preferably carried out at about -20° C to about 150° C, more preferably about 10° C to about 100° C, most preferably about 15° C to about 60° C.

It is within the scope of this invention to incorporate hydrogen as a feed stream to moderate polymer molecular weight as known in the art. The hydrogen is added at about 0 to about 30 mole percent based on the total monomer.

Additionally it is within the scope of this invention to incorporate "branch suppressors" during the EPDM polymerization to reduce branching. It is known in the art that certain Lewis bases, e.g., $NH_3$, are effective as branch suppressors. Additionally certain alkoxy silanes, e.g., methyl silicate ( $Si(OMe)_4$), ethyl silicate $Si(OEt)_4$), etc., have been recently discovered to act as effective branch suppressors without reducing catalyst efficiency or reactivity. The particular amount of suppressor required to suppress branching will depend on the nature of the suppressor, the diolefin, the catalyst system, the Al/V ratio and the polymerization conditions. Generally about 0.02 to 2.5 moles of suppressor to moles of aluminum can be used; preferably about 0.04 to 0.5 mol/mol are used. The use of excessive amounts of silicates will result in reduced catalyst activity. The silicate concentration can also be expressed in terms of Si/V mole ratio and can vary from about 0.1 to about 3.0; preferably about 0.3 to about 2.0; more preferably about 0.6 to about 1.5, e.g.,. about 0.4 to about 1.0.

The vanadium and aluminum compounds can be added to the reactor either separately or premixed with one another. The silicates, optionally used as branching suppressors, should be added to the reactor separately and not in combination with any of the catalyst components in order to avoid reaction with the catalyst components and an alteration of their polyerization characteristics.

The extent of grafting of polypropylene onto the EPDM backbone, i.e., the number of graft segments on the backbone, is dependent on several factors. The major factors are both diene content of the backbone and the reactivity of the remaining double bond under the specific propylene polymerization conditions. Under normal propylene polymerization conditions, the lesser the diene content, the less grafting will occur. However, with too little diene content, a greater number of backbone EPDM polymers will pass through the propylene polymerization step without being grafted. One PP graft per EPDM is thought to be optimal, more than about four grafts per backbone, and higher, will increasingly result in less effectiveness as a compatibilizer. However, even in the event of some EPDM not being grafted, that EPDM will not have a deleterious effect on the final blend but as known in the art will contribute some impact improving characteristics to the blend. As indicated above the diene monomer content in the EPDM will range from about 0.1 to about 6 wt.% of the EPDM, most preferably ranging from about 0.5 to about 3 wt.%.

Polymerization conditions for the grafting of the propylene onto the EPDM are those conventionally used for the preparation of polypropylene. As is well known in the art, propylene can be polymerized into isotactic polypropylene in the presence of stereo-specific Ziegler-Natta catalyst systems comprising compounds of the transition metals of Groups 4 to 6 and 8 of the Periodic Table of elements, preferably titanium compounds, most preferably titanium halides, and organometallic compounds of elements of groups 1 to 3 of the Periodic Table, especially aluminum alkyls or aluminum alkyl halides. Illustrative examples include titanium trichloride, titanium tetrachloride, triethylaluminum and diethyl aluminum chloride. These transition metal catalyst systems can be non-supported or supported, for example silica gel, or metal oxides and dihalides, such as MgO, $MgCl_2$, $ZnCl_2$, etc. Such systems can be reacted together and can be complexed with a variety of Lewis-base electron donors. Such procedures and components are only illustrative of the knowledge in the art with respect to polypropylene polymerization, any are contemplated as useful within the scope of the invention. The polymerization reaction is preferably conducted according to the slurry method employing an inert hydrocarbon diluent or liquid propylene as the vehicle. It will be particularly useful in accordance with this invention that the hydrocarbon diluent utilized in the EPDM polymerization step and still carrying the EPDM polymer products, typically hexane, be the reaction diluent in the propylene polymerization step. The polymerization temperature can be in the range of about 50° C. to about 100° C. and is preferably at a range or about 60° C. to about 80° C. The polymerization pressure can also vary over a wide range and is not particularly limited. The polymerization pressure can for example be in the range from between atmospheric pressure to $3.7 \times 10^3$ KPa.

The graft-polymerization process of the invention is effective in the amount of true graft polymers produced as opposed to straight or ungrafted EPDM/EP and polypropylene, with typically 10 to 90% of the EPDM subjected to the subsequent propylene polymerization step having polypropylene grafted thereto. For purposes of the invention directed to producing a compatibilizer product, the product should have at least 10 wt.% graft copolymer, preferably at least 30 wt.%, and most preferably 40 wt.% and greater. For purposes of the invention of producing a compatibilized polypropylene blend in situ considerably less graft polymer content need be achieved. As little as 0.1 wt.% of the graft polymer in polypropylene will be of some effect, with amounts of from 5 to 10 wt.% being most preferred. The in situ process for producing a

compatibilized blend of this invention comprises adjusting the ratio of the feed amounts of the EPDM polymer to the propylene in the polypropylene polyerization step.

## Polypropylene Blend Compositions

The polypropylenes useful in the blends of the invention are normally solid isotactic polypropylenes, i.e., polypropylenes of greater than 90% hot heptane insolubles, having a melt flow rate (MFR) of from about 0.5 to about 30 g/10 minutes (230 °C., 2160 g load). The particular density of the polypropylene is not critical. As known, such isotactic polypropylenes are normally crystalline and have densities ranging from about 0.89 to about 0.93 g/cc. Preferably, a polypropylene having a melt flow rate within the range of from about 1.0 to about 20 is employed. Moreover, the blends of the invention can include more than one polypropylene component, i.e., several polypropylenes having different melt flow rates, whereby the resulting blends have melt flow rates within the above ranges. Further, these polypropylenes include reactor copolymers of polypropylene (RCPP) which can contain about 1 to about 20 wt.% ethylene or an alpha olefin comonomer of 4 to 16 carbon atoms. The RCPP can be either a random or block copolymer. The density of RCPP can be about 0.80 to about 0.91 g/cc.

Methods for preparation of these propylene polymers are well known in the art. Generally, these polymer compositions can be prepared in the manner of the polypropylene segment of the graft polymer of this invention as described. For additional review of literature and patents in the art see "Olefin Polymers (Polypropylene)" in the Kirk-Othmer Encyclopedia of Chemical Technology, 3rd Edition v. 16, 453-469 (J. Wiley & Sons, 1981).

The EPR of the blends of this invention are comprised of copolymerized monomers of ethylene, alpha-olefins, e.g., propylene, and, optimally, known DM's, e.g., 1,4-hexadiene, 5-ethylidene-2-norbornene, as more fully described above for the EPDM portion of the graft polymer of this invention. The molecular weight range of these ethylene-alpha-olefin elastomeric polymers is that disclosed in the art and will typically range from about 5,000 to 1,000,000 weight average molecular weight ($M_w$), typically about 10,000 to 500,000 $M_w$, most typically about 15,000 to about 350,000 $M_w$. Mooney viscosity ($ML_{1+8}$, 127 °C.) will typically range from about 10 to about 90, more typically about 20 to about 75.

EPR is prepared by procedures known in the art and more specifically described above for the EPDM of this invention. Examples of such commercially available copolymers are VISTALON®, elastomeric copolymers of ethylene and propylene alone or with 5-ethylidene, 2-norbornene, marketed by Exxon Chemical Company, Houston, Texas, and Nordel®, a copolymer of ethylene, propylene and 1,4-hexadiene, marketed by E. I. dupont de Nemours & Company, Wilmington, Delaware.

These ethylene copolymers, terpolymers, tetrapolymers, etc., are readily prepared using soluble Ziegler-Natta catalyst compositions. For a review of the literature and patent art see: "Polyolefin Elastomers Based on Ethylene and Propylene", by F. P. Baldwin and G. VerStrate in Rubber Chem. & Tech. Vol. 45, No. 3, 709-881 (1972) and "Polymer Chemistry of Synthetic Elastomers", edited by Kennedy and Tornqvist, Interscience, New York, 1969. For more recent review see: "Elastomers, Synthetic (Ethylene-Propylene)" by E. L. Borg in Encyclopedia of Chemical Technology, 3d Ed., Vol. 8, 492-500 (Kirk-Othmer, 1979) and "Ethylene-Propylene Elastomers", by G. VerStrate in Encyclopedia of Polymer Science and Engineering, Vol. 6, 2d Ed., 522-564 (J. Wiley & Sons, 1986).

Suitable polymers may be prepared in either batch or continuous reactor systems, in gas phase, solution or slurry polymerizations. In particular, effective use can be made of a tubular reactor system to achieve novel molecular composition and molecular weight distribution in accordance with U.S. Patent 4,540,753, which is incorporated herein by reference. In common with all Ziegler-Natta polymerizations, monomers, solvents and catalyst components are dried and freed from moisture, oxygen or other constituents which are known to be harmful to the activity of the catalyst system. The feed tanks, lines and reactors may be protected by blanketing with an inert dry gas such as purified nitrogen. Chain propagation retarders or stoppers, such as hydrogen and anhydrous hydrogen chloride, may be fed continuously or intermittently, to any but the tubular reactor of U.S. Patent 4,540,753, for the purpose of controlling the molecular weight and/or MWD within the desired limits. Additionally, as described above, it is known to incorporate "branch suppressors" such as certain Lewis Bases, e.g., $NH_3$, and certain silicates, during the EPDM polymerization to reduce branching.

The improved polypropylene compositions of the invention generally comprise from about 45% by weight to about 98% by weight polypropylene, from 0 to about 50% by weight ethylene-alpha-olefin elastomer, and from about 0.1% to about 20% by weight of the graft copolymer. More preferably, the impact blends of the invention have about 65 wt. % to about 90 wt. % polypropylene, about 8 wt.% to about

30 wt.% ethylene-alpha-olefin, elastomer, and about 2 wt.% to about 15 wt.% graft polymer. Most preferably, the graft copolymer is incorporated at about 5 wt.% to about 10 wt.%, with the propylene and ethylene-alpha-olefin adjusted within the foregoing ranges. All weight percents are based on the total weight of the combined polymers making up the final impact blend composition.

Generally the impact polypropylene blends of the invention can be prepared by mixing the graft polymer, elastomer and polypropylene components in any order and subjecting the the mixture to temperatures of, for example, 175° to about 210° C. Such mixing and heating can be accomplished using any conventional hot processing equipment in the art, such as a Banbury Mixer, a roll mill, a twin screw extruder, etc., employing known thermoplastic processing techniques. Additionally, by addition of curing agents during this mixing and heating process, the EPDM of the graft polymer of the invention and the blend EPR can be partially crosslinked to form a cured thermoplastic/elastomeric composition. Such curing processes, the curing agents useful therein, and the appropriate amounts of curing agents needed to achieve appropriate curing levels are known in art, see, e.g., U.S. Patent 4,087,485, the disclosure of which incorporated herein by reference. Optionally, a masterbatch blending technique is employed wherein the elastomer and graft copolymer are mixed with a portion of the polypropylene, e.g., at about 30 to about 50 wt.% of the total weight of the masterbatch blend (for elastomer and graft components), and about 3 to about 12% of the total amount of polypropylene of the inventive impact blend and, subjected to the above-mentioned blending or curing conditions. This produces a melt-flowable thermoplastic elastomeric blend having a discontinuous elastomeric phase intimately dispersed in a continuous polypropylene phase, each phase having incorporated therein one or more of the respective similar segments of the graft polymer. This blend can then be pelletized for ease of handling. This masterbatch blend is then available for intimate mixing with homopolymer polypropylene at an elevated blending temperature at a desired ratio to produce the impact blend of the invention having the above-mentioned respective polymer components.

For laboratory purposes a physical blend may be accomplished by dissolving the graft polymer in a suitable solvent, such as xylene, and then adding the EPR and PP compounds while stirring. The order of addition is unimportant. This is illustrated in the Examples, the results are generally equivalent but on a laboratory scale.

As an alternate method of preparing the impact polypropylene blends of the invention the *in situ* process briefly described above may be utilized. By introducing the EPDM backbone previously formed, optionally with the elastomeric EPR component, into polypropylene polymerization conditions with an amount of propylene approximately equal to 4 to 1000 times by weight the amount desired to be graft polymerized onto the EPDM a reaction product comprising polypropylene blended with the graft polymer, and optionally EPR, is formed. This reaction product blend can then be blended with optional additional elastomer compounds in the manner described above to achieve the preferred improved impact blends of this invention.

The compositions of this invention, as with other polypropylene impact blends known in the art, can contain stabilizers, antioxidants, processing aids, fillers, pigments, and other additives if desired, in normal and conventional amounts, depending upon the desired end use. The polypropylene blends of the invention can be used to produce films, filaments, rods, protective coatings, molded and extruded shaped articles, and the like, by procedures known in the art.

The following examples more particularly illustrate the nature of the invention but are not intended to be limitative thereof. In the following examples, the mechanical property evaluations were made employing the following tests.

| TEST FOR | VIA | ASTM |
|---|---|---|
| Impact Strength | Notched Izod at room temp. | D256, Method A |
| Impact Strength | Notched Izod at 0° C. temp. | D256, Method A |
| Impact Strength | "Reversed" Notched Izod at -20° C. temp.[a] | -- |

a-This test was run with the notch away from the pendulum.

Example 1

An EPDM containing 5-vinyl 2-norbornene (VNB), a compound commercially available from Aldrich Chemical Company, Milwaukee, Wisconsin, was prepared in a continuous flow stirred tank reactor (CFSTR). A one liter CFSTR was operated at 35 °C and 500 KPa with continuous agitation at 1200 RPM. A feed stream comprising 3.37 Kg/hr. of hexane, 90.99 g/hr. of ethylene, 549 g/hr. of propylene and 3.38 g/hr. of VNB was continuously fed to the CFSTR. The catalyst system comprised $VOCl_3$ and EASC at an Al/V molar ratio of 5. $VOCl_3$ was added at 0.1348 g/hr. and EASC was added at 0.481 g/hr. Average residence time in the CFSTR was about 9.5 minutes. Hydrogen (300 ppm) was added to act as a chain transfer agent. An EPDM containing 44.52 wt.% ethylene, 52.68 wt.% propylene and 2.83 wt.% of VNB was produced. The product had a Mooney viscosity ($M_L$, 1+8, 100 °C.) of 21.0 and a number-average molecular weight of about 30,000 as measured by gel permeation chromotography. IR film spectra of the polymer showed a band at 906 cm-1 indicating the incorporation of VNB.

The EPDM-containing effluent from this reactor was scavenged free of vanadium catalyst residues by passage through a column of activated silica gel before being fed into a second reactor, this time a batch reactor. About 30g. of the EPDM in hexane was introduced along with the second catalyst system with heat being added to the system to increase the temperature to about 50 °C. The catalyst was $TiCl_3$, a commercial product available as "Stauffer AA" from Stauffer Chemical Company, Westport, Connecticut, and the co-catalyst was triethyl aluminum. About 2g of Stauffer AA was added; the molar ratio of aluminum to titanium was about 2.0. Gaseous propylene monomer was then added continuously over a period of about one-half hour until about 30g. of propylene had been added. About 3-4 mol. % of ethylene, based on the propylene amount, was introduced along with the EPDM, resulting in addition of about 1 gm of ethylene. The reaction mixture thus formed was stirred and allowed to react over a period of about 2 hours.

The product formed was a graft polymer comprising the EPDM having polypropylene grafted thereto at one or more of the diene monomer sites. Product analysis showed a product weight of 57g. of which 70% was determined to be hexane extractable and 84% was determined to be heptane extractable by fractionation analysis. This showed the grafting of different $\overline{M}_w$ polypropylene segments onto the EPDM. IR analysis of the 70%-hexane extractable product evidenced both the loss of vinyl double bonds in the EPDM, as seen from the depression of the 906 $cm^{-1}$ peak in IR analysis, as well as addition of polypropylene as seen from IR absorption due to crystalline polypropylene. Also from IR analysis it was determined that 70% of the vinyl double bonds was incorporated into the polypropylene segments thus formed. The appearance of normally insoluble polypropylene in the hexane solution would not occur if the polypropylene were not grafted to the normally soluble EPDM.

A portion of graft copolymer formed above was dissolved in xylene. Approximately 97 wt. % was xylene soluble. The xylene-soluble fraction was solution blended with a commercial grade of EPM (Vistalon 457, Mooney Viscosity (1+8, 127 °C) of 25, 43 wt.% ethylene and 57 wt.% propylene) and a commercial grade of polypropylene (PP-5052, homopolymer with MFR of 1.2 g/10 min. and density 0.90 g/cm$^3$), both commercial products available from Exxon Chemical Company, Houston, Texas. The blend comprised 72/18/10 parts by weight of PP/EPM/graft copolymer. The polymer was recovered from solution by pouring the solution into an excess of methanol at 2 °C. The polymer was dried, recovered and vacuum molded into pellets.

The pellets were microtomed in accordance with the procedures set forth in Polymer Microscopy, L. C. Sawyer and D. T. Grobb, p. 85-92 (Chapman & Hall, 1987). The microtomed sections were extracted with hexane at room temperature to remove the EPM. A photomicrograph (Fig. Ib) of the microtomed extracted sample was made.

This procedure was repeated with an 80/20 blend of PP/EPM. The photomicrograph of this sample is shown in Figure Ia. The extracted EPM appears as holes in the dark background of polypropylene. As is readily apparent from a comparison of Figures Ia and Ib, the EPM domains are much smaller in the blend with the graft copolymer. The average size of the domains is about 3 microns for the PP/EPM blend and about 0.3 microns for the PP/EPM/EPDM-g-PP blend. Hence the graft copolymer has acted to compatibilize the PP/EPM blend as evidenced by a decrease of about an order of magnitude in the size of EPM domains.

## Example II

The polymerization process of Example I was repeated using 5-(3′-butenyl 2 norbornene)("BNB") as the diene. A one liter CFSTR was operated at 35 °C and 500 KPa with continuous agitation at 1200 RPM. A feed stream comprising 3.37 Kg/hr. of hexane, 75.8 g/hr. of ethylene, 472 g/hr. of propylene and 3.77 g/hr. of BNB was continuously fed to the CFSTR. The catalyst system comprising $VOCl_3$ and EASC at an Al/V molar ratio of 10. $VOCl_3$ was added at 0.1887 g/hr. and EASC was added at 0.676 g/hr. Additionally, $NH_3$

was added to the reactor as a cationic branching suppressor at the rate of 2 moles of $NH_3$ per mole of vanadium. Hydrogen (350 ppm) was added to act as a chain transfer agent. An EPDM containing 45.8 wt.% ethylene and 2.7 wt. % of BNB was produced at a continuous rate of about 139g/hr. IR film spectra of the polymer showed a band at 910 $cm^{-1}$ indicating the incorporation of BNB.

The effluent from this first CFSTR was fed into a 3.785 liter CFSTR to which 200g of propylene/hr. were added. The catalyst system was introduced as a hexane suspension and comprised a mixture of Stauffer AA and triethyl aluminum ("TEAL"). This system had an Al/Ti ratio of 1/10. The catalyst feed rate was 2.0g/hr. of Stauffer AA and 11.5 g/hr. of TEAL. The polymerization was conducted at 40°C and 217 g/hr. of graft copolymer was collected from the reactor effluent.

Analysis of the polymer showed that the ethylene content was 38.0 wt.%. Film IR indicated (i) the added presence of isotactic polypropylene (i-PP) and (ii) diminished intensity for the 910 $cm^{-1}$ alpha-olefin band, indicating incorporation of the remaining BNB exocyclic unsaturation into the i-PP segment.

## Evaluation

As known in the art a principal purpose for preparing PP/EPM blends is to improve the impact resistance of the polypropylene. To test the effect of compatibilizing the blends on impact strength, blends of PP/EPM were prepared and the VNB graft copolymer of this invention (the polymer of Example 1) was added to the blend. In order to ensure good mixing, masterbatch blends having the compositions of 1) 1:2 polypropylene to EPR and 2) 1:1.28:.71 of polypropylene to EPR to graft polymer were prepared using a CSI-MAX screwless extruder. The desired compositions as shown in Table I, (Sample Nos. 1 and 2) were prepared by blending additional polypropylene into the masterbatch blends utilizing the screwless extruder. The compatibilized blend comprised 7.7 wt.% of the graft copolymer of this invention. The results are shown in Table I.

As is typical for PP/EPR blends no improvement in impact resistance at room temperature is observed. However, at temperatures which are at or below the glass transition temperature of polypropylene, there is a substantial improvement in impact strength as demonstrated in the Notched Izod test. The impact resistance for the compatibilized blend at 0°C was twice that of the PP/EPM blend, and at -20°C the impact resistance was 39% higher. It is theorized that the improvement is a direct consequence of reduction in size of the EPM domains illustrated in Figure I.

TABLE I

| IMPACT STRENGTH OF BLENDS WITH AND WITHOUT GRAFT COPOLYMER | | |
|---|---|---|
| Sample No. | 1 | 2 |
| Composition (wt. %) | | |
| Polypropylene-E15 | 85.0 | 78.3 |
| Vistalon 457 | 15.0 | 14.0 |
| (VNB-EPDM)-g-(PP) graft copolymer | -- | 7.7 |
| Impact Strength (ft-lb/in.) | | |
| Notched Izod, RT | 1.4 | 1.3 |
| Notched Izod, 0°C | 0.3 | 0.6 |
| "Reverse Notched Izod" at -20°C. | 5.4 | 7.5 |

Although the invention has been described with reference to particular means, materials and embodiments it is to be understood that the invention is not limited to the particulars disclosed and extends to all equivalents within the scope of the claims.

## Claims

1. A graft polymer comprising an ethylene-alpha-olefin-diene monomer polymer having polypropylene

grafted thereto at at least one diene monomer site.

2. The graft polymer of claim 1 wherein said alpha-olefin is propylene.

3. The polymer of claim 1 or 2 wherein said polypropylene is isotactic polypropylene.

4. The polymer of claim 1, 2 or 3 wherein said diene monomer comprises at least one diene selected from the group consisting of 5-vinyl-2-norbornene and 5-(3′-butenyl)-2-norbornene.

5. A polypropylene composition comprising polypropylene and a graft polymer according to any preceding claim.

6. The polypropylene composition of claim 5 wherein both the polypropylene component and the polypropylene graft are substantially isotactic.

7. The polypropylene composition of claim 5 or 6 additionally comprising an ethylene-propylene rubber composition.

8. The polypropylene composition of claim 5, 6 or 7 comprising 0 to 50 wt. % said ethylene-propylene rubber, 45 to 98 wt. % said polypropylene, and 0.1 to 20 wt. % said graft polymer.

9. A process for preparing a graft polymer comprising the steps of :

A) combining under polymerization conditions ethylene, at least one alpha olefin monomer, and at least one diene monomer in the presence of a non-stereospecific Ziegler-Natta catalyst system selected for its capability for producing random copolymers;

B) combining under polymerization conditions a polymer prepared in accordance with step (A) and propylene in the presence of a stereo-specific Ziegler-Natta catalyst system selected for its capability for producing isotactic polypropylene.

10. The process of claim 9 wherein said alpha olefin is at least one member of the group consisting of propylene and 1-butene.

11. The process of claim 9 or 10 wherein said at least one diene monomer is a diene monomer containing two non-conjugated sites of ethylenic unsaturation which are of unequal reactivity under Ziegler-Natta polymerization conditions.

12. The process of claim 11 wherein said diene monomer is at least one member of the group consisting of 5-vinyl-2-norbornene and 5-(3′-butenyl-2-norbornene.

13. The process of claim 9, 10, 11 or 12 wherein the non-stereo-specific Ziegler-Natta catalyst system comprises a hydrocarbon soluble Vanadium salt and an aluminum alkyl and the stereo-specific Ziegler-Natta catalyst system comprises a titanium halide and at least one member of the group consis ting of alkyl aluminums and alkyl aluminum halides.

14. The process of claim 9, 10, 11, 12 or 13 wherein the polymerization of step A) is carried out in at least one reaction vessel and the polyer prepared in accordance with step A) is transferred to at least one reaction vessel where the polymerization of step B) is carried out.

15. The process of claim 9, 10, 11, 12 or 13 wherein the polymerizations of steps A) and B) are carried out in at least one tubular reactor.

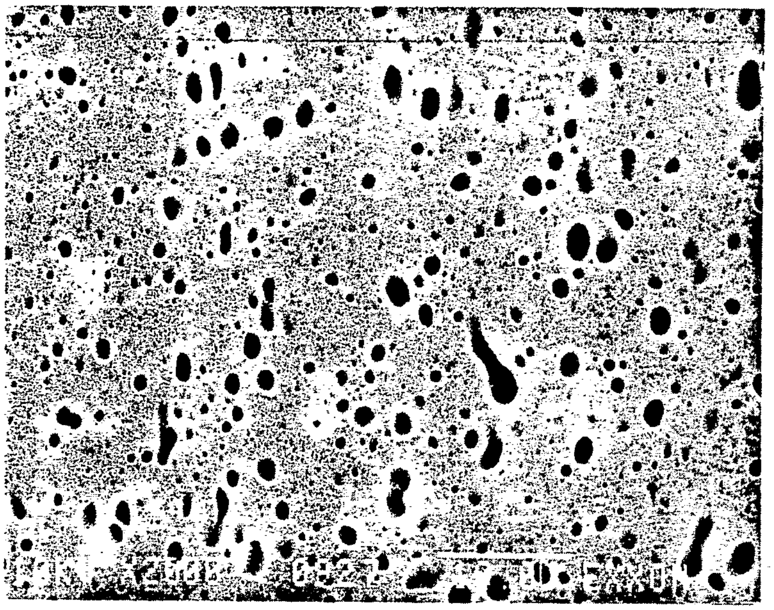

80/20 PP/EPR

FIG.1A

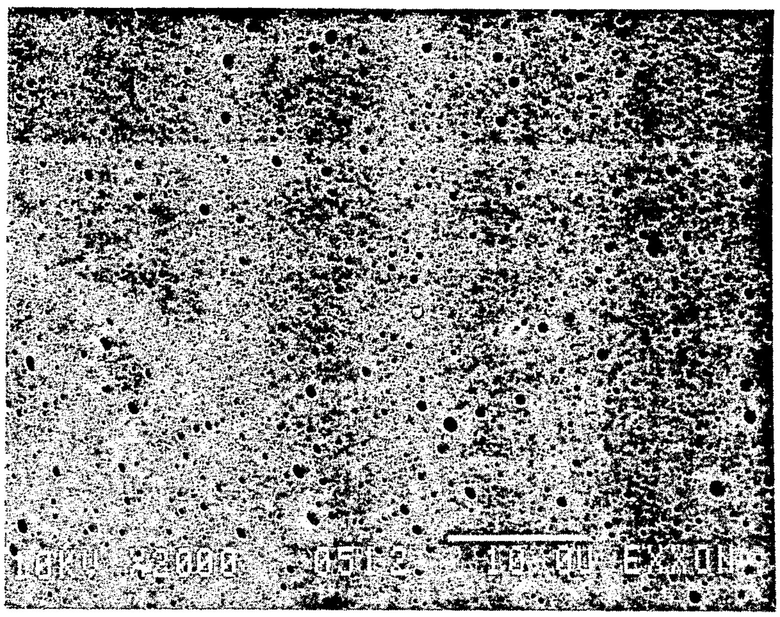

72/18/10 PP/EPR/GRAFT COPOLYMER

Morphology of Blends With and
Without Graft Copolymer, 2000x.

FIG.1B

Neu eingereicht / Newly filed
Nouvellement déposé